# EUROPEAN PATENT APPLICATION

(11) **EP 1 923 788 A2**
(43) Date of publication of application: **21.05.2008**
(21) Application number: 07014414.2
(22) Date of filing: 23.07.2007
(51) Int. Cl.: G06F 11/267

(54) **Multi-CPU mobile terminal and multi-CPU test system and method**

(30) Priority: 16.11.2006 KR 20060113411
(71) Applicant: Samsung Electronics Co., Ltd., Suwon-si, Gyeonggi-do 442-743 (KR)
(72) Inventor: Kim, Hak Hwan, Yeongtong-gu Suwon-si Gyeonggi-do (KR)
(74) Representative: Lang, Johannes

(57) **Abstract**

A mobile terminal equipped with multiple CPUs and a system and method for testing multiple CPUs of the mobile terminal are provided. A mobile terminal of the present invention includes test ports installed in processors, respectively, an earphone port, a first interface connector to connect an external device to the mobile terminal, a first switch to selectively connect the first interface connecter to the earphone port and at least one of the test ports, a second interface connector to connect the external device to the mobile terminal, and a second switch to selectively connect the second interface connector to the remaining test ports.

## Description

### BACKGROUND OF THE INVENTION

### FIELD OF THE INVENTION

The present invention relates to a mobile terminal equipped with multiple central processing units (CPUs) and, in particular, to a mobile terminal equipped with multiple CPUs and a system and method for testing multiple CPUs of the mobile terminal.

### DISCUSSION OF THE BACKGROUND

In order to effectively process various supplementary functions of a mobile terminal, the use of multiple CPUs is becoming increasingly popular to process routines of the supplementary functions in a distributed manner. With the use of multiple CPUs, a complex programmable logic device (CPLD) may be used as an input/output (I/O) expander that increases the number of general purpose input output (GPIO) ports of the mobile terminal.

After manufacturing a mobile terminal, tests on the multiple CPUs and CPLDs of the mobile terminal are performed. In order to perform the tests, the mobile terminal provides external interface connectors that are connected to joint test action group (JTAG) ports. JTAG refers to the IEEE 1149.1 standard entitled Standard Test Access Port and Boundary-Scan Architecture for test access ports used for testing printed circuit boards (PCBs) and integrated chips (ICs). A JTAG emulator is a hardware device that is capable of inputting and outputting information to the PCB or IC through JTAG ports. The JTAG port is similar to a universal serial bus (USB) port and a JTAG port is provided for each individual CPU and CPLD. That is, JTAG ports provide connection means to test the PCB and IC of a mobile terminal. The JTAG ports are connected to trances and the external interface connectors to deliver test signals. The external interface connector is typically provided in the form of a 24-pin connector for multiple purposes, including power supply, program coding, external device connection, and test processing.

In short, the multi-CPU mobile terminal is provided with individual JTAG ports for respective CPUs and CPLDs and is tested through the JTAG ports and the 24-pin interface connector. The JTAG ports corresponding to CPUs of such a mobile terminal are connected to an interface connector. Accordingly, the conventional multi-CPU mobile terminal may require an increased number of JTAG ports in proportion to the number of the CPUs and the design complexity. Since the conventional multi-CPU mobile terminal may require a plurality of JTAG ports connected to one interface connector, additional devices and controls to individually manage the JTAG ports may be required. Further, with the structure of the conventional multi-CPU mobile terminal, the respective CPUs are generally tested in series, resulting in increased testing time.

### SUMMARY OF THE INVENTION

The present invention provides a multi-CPU mobile terminal and a multi-CPU testing system and method that may be capable of simultaneously testing multiple CPUs by connecting the multiple CPUs of the mobile terminal to test equipment through multiple JTAG ports installed to correspond to the CPUs.

The present invention also provides a multi-CPU mobile terminal and a multi-CPU testing system and method that may be capable of sequentially testing multiple CPUs by selectively connecting the multiple CPUs of the mobile terminal to test equipment by means of a switch.

Additional features of the invention will be set forth in the description which follows, and in part will be apparent from the description, or may be learned by practice of the invention.

The present invention discloses a mobile terminal having at least two processors. The mobile terminal includes test ports installed in the processors, respectively, an earphone port, a first interface connector to connect an external device to the mobile terminal, a first switch to selectively connect the first interface connecter to the earphone port and at least one of the test ports, a second interface connector to connect the external device to the mobile terminal, and a second switch to selectively connect the second interface connector to the remaining test ports.

The present invention also discloses a mobile terminal having at least two processors. The mobile terminal includes an earphone port to output an audio signal, test ports installed in the processors, respectively, an interface connector to connect an external device to the mobile terminal, and a switch to selectively connect the interface connector to the earphone port and at least one of the test ports.

The present invention also discloses a mobile terminal including two processors each having a joint test action group (JTAG) port. The mobile terminal includes an earphone port to output an audio signal, a first interface connector to connect the JTAG port of one of the two processors to an external device, a switch to selectively connect the first interface connector to the earphone port and the JTAG port of the first processor, and a second interface connector to connect the JTAG port of the other processor to the external device.

The present invention also discloses a multi-processor test system for testing multiple processors. The multi-processor test system includes a mobile terminal, an external connector, and a jig box. The mobile terminal includes an earphone port to output an audio signal of the mobile terminal, test ports installed in the processors, respectively, a first interface connector to connect an external device to the mobile terminal, a first switch to selectively connect the first interface connector to the earphone port and at least one of the test ports, a second interface connector to connect the external device to the mobile terminal, and a second switch to selectively connect the second interface connector to the other test ports. The external connector is connected to at least one of the first interface connector and the second interface connector, and the jig box is connected to the external connector to exchange test signals with the processors through the first interface connector and the second interface connector.

The present invention discloses a multi-processor test system for testing multiple processors. The multi-process test system includes a mobile terminal, an external conductor, and a jig box. The mobile terminal includes an earphone port to output an audio signal of the mobile terminal, joint test action group (JTAG) ports installed in the respective processors, an ear jack interface connector to connect an external device to the mobile terminal, and a switch to selectively connect the ear jack interface connector to the earphone port and at least one of the JTAG ports. The external connector is connected to the earphone jack interface connector, and the jig box is connected to the external connector to exchange test signals with the processors through the ear jack interface connector.

The present invention also discloses a multi-processor test system for testing multiple processors. The multi-processor test system includes a mobile terminal, an external connector, and a jig box. The mobile terminal includes an earphone port, a first processor having a first joint test action group (JTAG) port, a second processor having a second JTAG port, a first interface connector to connect an external device to the mobile terminal, a switch to selectively connect the first interface connector to the earphone port and the first JTAG port, and a second interface connector to connect the external device to the second processor through the second JTAG port. The external connector is connected to at least one of the first interface connector and the second interface connector, and the jig box is connected to the external connector to exchange test signals with the first processor and the second processor through the first JTAG port and the second JTAG port.

The present invention also discloses a multi-processor test method for testing multiple processors of a mobile terminal having an earphone jack connector. The multi-process test method includes connecting the earphone jack connector to a test port installed in one of processors and testing the processor through the test port.

The present invention also discloses a multi-processor test method for testing multiple processors of a mobile terminal having an earphone jack connector. The multi-processor test method includes connecting a first interface connector of the mobile terminal to a first external connector, determining whether to enter a test mode depending on the type of first external connector, connecting the first interface connector to a first test port of a first processor if it is determined that a test mode is to be entered, determining whether a second interface connector of the mobile terminal is connected to a second external connector, determining whether to enter a test mode depending on the type of second external connector, connecting the second interface to a second test port of a second processor if it is determined that a test mode is to be entered, and testing the first processor and the second processor at the same time.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
- FIG. 1: is a circuit diagram showing JTAG trace equipment connected to a 24-pin interface connector of a mobile terminal according to an exemplary embodiment of the present invention.
- FIG. 2: is a block diagram showing a configuration of a mobile terminal according to an exemplary embodiment of the present invention.
- FIG. 3: is a circuit diagram showing a configuration of the switch unit of FIG. 2.
- FIG. 4: is a partial enlarged view showing a coupling between the second interface connector and the switch of FIG. 3.
- FIG. 5: is a block diagram showing a configuration of a mobile terminal according to another exemplary embodiment of the present invention.
- FIG. 6: is a circuit diagram showing a configuration of the first switch unit of FIG. 5.
- FIG. 7: is a block diagram showing a configuration of a multi-CPU test system according to another exemplary embodiment of the present invention.
- FIG. 8: is a flowchart showing a method for testing a multi-CPU mobile terminal according to an exemplary embodiment of the present invention.
- FIG. 9: is a flowchart showing a method for testing a multi-CPU mobile terminal according to another exemplary embodiment of the present invention.
- FIG. 10: is a flowchart showing a method for testing a multi-CPU mobile terminal according to another exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present.

The mobile terminal may be a device such as a Personal Digital Assistant (PDA), a laptop computer, a Smartphone, a 3^{rd} generation standard mobile terminal, a Code Division Multiple Access (CDMA) terminal, a Global System for Mobile communication (GSM) terminal, a Global Packet Radio Services (GPRS) terminal, a Wireless Local Area Network (WLAN) terminal, a Wireless Broadband (WiBro) Terminal, and a High Speed Downlink Packet Access (HSDPA) terminal.

In exemplary embodiments of the present invention, a plurality of JTAG ports is provided for testing the multiple CPUs of a mobile terminal. The mobile terminal is provided with two interface connectors that are connected to the JTAG ports of the multi-CPU, respectively. The two interface connectors may be 24-pin interface connectors or 10-pin interface connectors. However, the number of the pins may be changed and any interface connectors securing the required number of ports for a JTAG test may be employed. The 24-pin interface connector may be used for power supply, testing, and external USB port connection, and the 10-pin interface connector may be used as an earphone jack.

It is noted that the present invention is not limited to interface connectors having a particular number of pins or the positions of the interface connectors shown in the exemplary embodiments of the present invention. For example, the number of pins of the interface connectors, as well as the positions of the interface connectors, may be modified in accordance with characteristics and manufacturing techniques of the mobile terminal.

In the present invention, a test target device may be one of a multimedia and a communication module chip, such as a CPLD, a PDA chip, a call processing chip, a WiBro chip, or a CDMA chip.

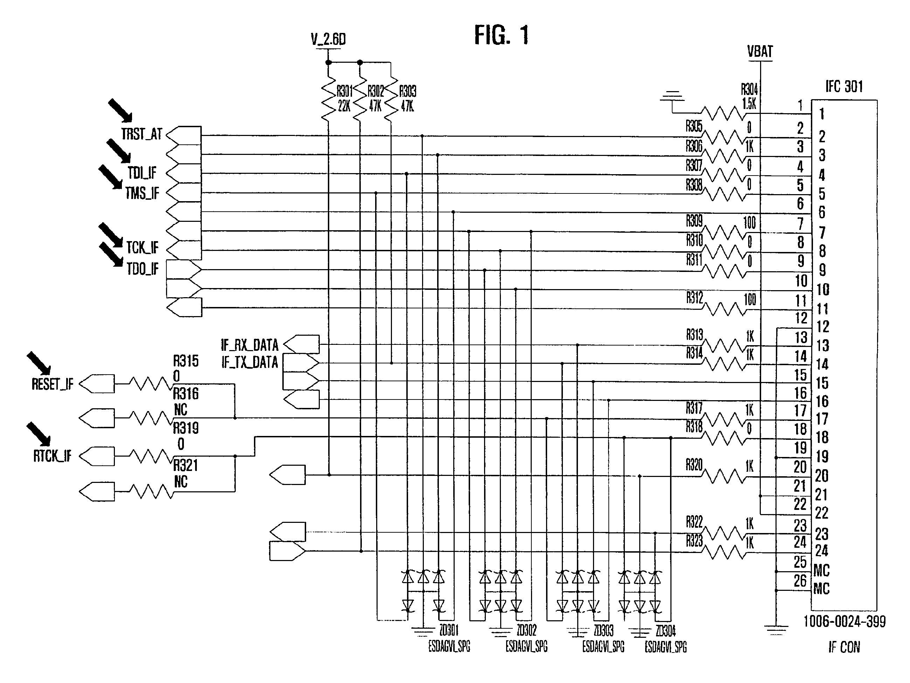

FIG. 1 is a circuit diagram showing a JTAG trace equipment connected to a 24-pin interface connector of a mobile terminal according to an exemplary embodiment of the present invention.

Referring to FIG. 1, a 24-pin interface connector IF CON includes a JTAG trace test reset pin TRST_AT, a test data input pin TDI_IF, a test mode select pin TMS_IF, a test clock interface pin TCK_IF, a terminal reset interface pin REST_IF, a reserve test clock pin RTCK_IF, and a test data output pin TDO_IF to enable JTAG trace equipment to the mobile terminal. The 24-pin interface connector may further support additional connections of a reference voltage pin VDD and a ground pin GND.

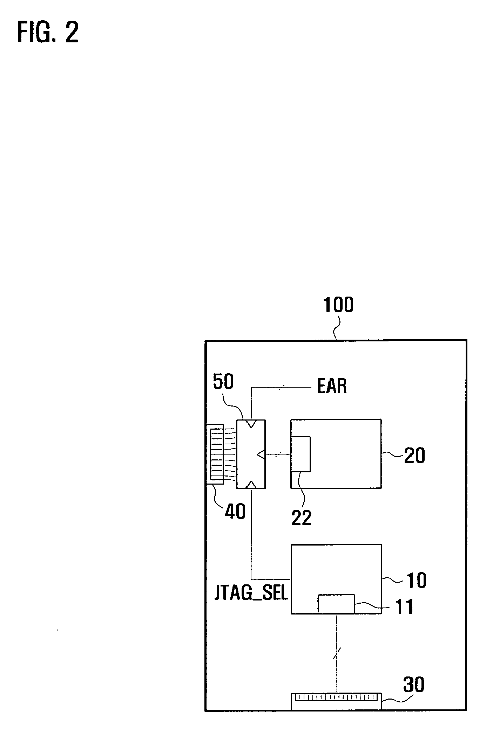

FIG. 2 is a block diagram showing a configuration of a mobile terminal according to an exemplary embodiment of the present invention.

Referring to FIG. 2, the mobile terminal 100 includes a main CPU 10, an 11^{th} JTAG port 11 to test the main CPU 10, a sub CPU 20, a 12^{th} JTAG port 22 to test the sub CPU 20, a first interface connector 30 connected to the main CPU 10, a second interface connector 40 connected to the sub CPU 20, and a switch unit 50 arranged between the sub CPU 20 and the second interface connector 40 to switch between the sub CPU 20 and an earphone port EAR.

The main CPU 10 is a unit to manage basic operations of the mobile terminal 100. The main CPU 10 controls call processing and data communication of the mobile terminal 100. The main CPU 10 also generates high and low voltage signals that are transmitted to the switch unit 50 through a test control signal line JTAG_SEL.

The 11^{th} JTAG port 11 is formed at a side of the main CPU 10 and is provided with a plurality of pins to test the main CPU 10. The 11^{th} JTAG port 11 is coupled to the first interface connector 30 to deliver test signals input through trace equipment or a test computer connected to the first interface connector 30.

The sub CPU 20 is a unit to manage supplementary operations of the mobile terminal 100 in cooperation with the main CPU 10. The supplementary operations include motion picture display and digital multimedia broadcast (DMB) signal reception and playback, etc. The sub CPU 20 may be a complex programmable logic device (CPLD) responsible for expansion of general purpose input output (GPIO) and voltage leveling of the main CPU 10. The sub CPU 20 is provided with the 12^{th} JTAG port 22 for supporting the test of the sub CPU 20.

The 12^{th} JTAG port 22 is formed at a side of the sub CPU 20 to test the sub CPU 20. The 12^{th} JTAG port 22 is selectively connected to a second interface connector 40 through the switch unit 50 to allow the trace equipment or test computer connected to the second interface connector 40 to test the sub CPU 20.

The first interface connector 30 is a connector having a plurality of pins to support a connection with an external device and is connected to the 11^{th} JTAG port 11 of the main CPU 10. The first interface connector 30 may include pins to supply power and transmit data, in addition to the pins connected to the 11^{th} JTAG port 11. For this reason, the first interface connector 30 may be a 24-pin connector.

The second interface connector 40 is connected to the 12^{th} JTAG port 22 of the sub CPU 20 by means of the switch unit 50 to provide an interface to connect external devices to the mobile terminal 100. The second interface connector 40 may be selectively connected to the 12^{th} JTAG port 22 and the earphone port EAR. When it is connected to the earphone port EAR, the second interface connector 40 acts as an earphone jack.

The switch unit 50 performs switching between the earphone port EAR and the 12^{th} JTAG port 22 under the control of the main CPU 10. That is, if the mobile terminal enters a test mode, the switch unit 50 connects the second interface connector 40 to the 12^{th} JTAG port 22 such that the test equipment is connected to the second interface connector 40 to transmit test signals to the sub CPU 20 via the 12^{th} JTAG port 22. In the case of an earphone mode, the switch unit 50 connects the second interface connector 40 to the earphone port EAR such that signals are delivered to an earphone (not shown) connected to the second interface connector 40. The switch unit 50 operates under the control of the main CPU 10 and the control signals may be transmitted through the test control signal line JTAG_SEL. The test control signal line JTAG_SEL may connect the sub CPU 20 and the switch unit 50 such that the sub CPU 20 controls the switching operation of the switch unit 50.

In the above structured mobile terminal 100, the main and sub CPUs 10 and 20 are connected to the first and second interface connectors 30 and 40, respectively, so that it may be possible to test the main and sub CPUs 10 and 20 individually or simultaneously, which may reduce the time required for testing. Also, the connection links are distributed to the 11^{th} and 12^{th} JTAG ports 11 and 22, which may reduce circuit design complexity.

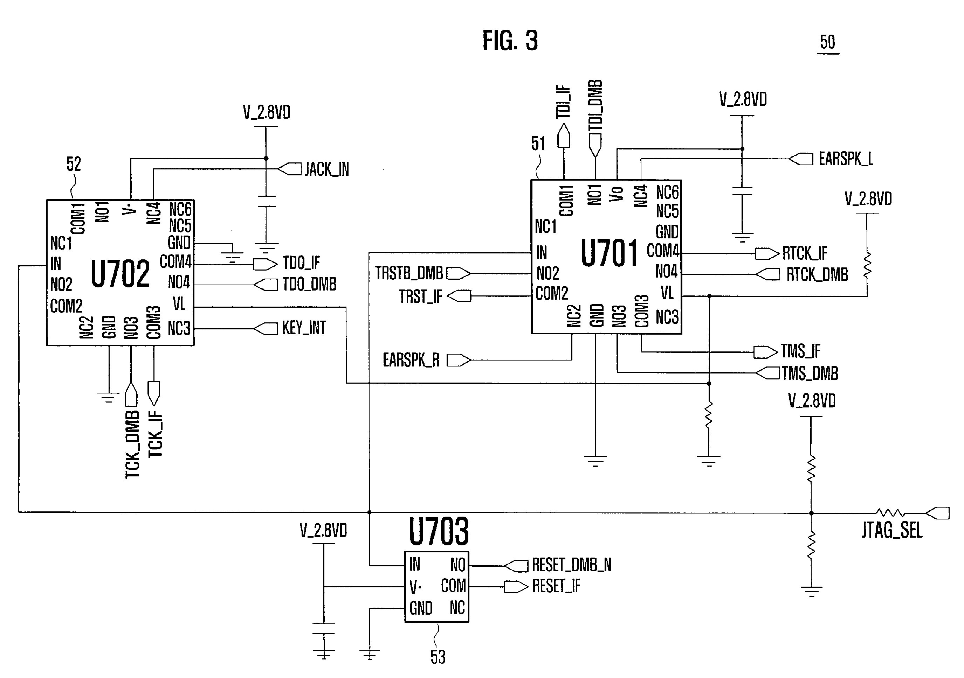

FIG. 3 is a circuit diagram showing a configuration of the switch unit of FIG. 2.

In this exemplary embodiment, it is assumed that the sub CPU 20 is responsible for controlling a DMB module, and the 12^{th} JTAG port 22 is configured with pins to receive DMB test signals.

Referring to FIG. 3, the switch unit 50 includes an 11^{th} switch 51, a 12^{th} switch 52, and a 13^{th} switch 53. The 11^{th}, 12^{th}, and 13^{th} switches 51, 52, and 53 operate in accordance with control signals transmitted from the main CPU 10 through the test control signal line JTAG_SEL.

The 11^{th} switch 51 receives control signals through an input pin IN and is activated in response to a high signal to enable some pins of the 12^{th} JTAG port 22. That is, a pin N01 of the 11^{th} switch 51 is connected to a test data input DMB pin TDI_DMB of the 12^{th} JTAG port 22, a pin N02 of the 11^{th} switch 51 is connected to a JTAG trace test reset DMB pin TRSTB_DMB of the 12^{th} JTAG port 22, a pin N03 of the 11^{th} switch 51 is connected to a test mode select DMB pin TMS_DMB of the 12^{th} JTAG port 22, and a pin N04 of the 11^{th} switch 51 is connected to a reserve test clock DMB pin RTCK_DMB of the 12^{th} JTAG port 22. When the sub CPU 20 operates in a DMB mode, DMB-associated test signals may be input through the pins of the 12^{th} JTAG port 22.

In contrast to the high signal, when a low signal is input, a pin NC2 of the 11^{th} switch 51 is connected to an ear speaker pin EARSPK_R of the earphone port EAR, and another pin NC4 of the 11^{th} switch 51 is connected to another ear speaker pin EARSPK_L of the earphone port EAR. The ear speaker pin EARSPK_L is connected to a left speaker, and the ear speaker pin EARSPK_R is connected to a right speaker.

Pins COM1, COM2, COM3, and COM4 of the 11^{th} switch 51 are connected to pins TDI_IF, TRST_IF, TMS_IF, and RTCK_IF of the second interface connector 40, respectively.

The 12^{th} switch 52 receives control signals through an input pin IN and is activated in response to a high signal to enable some pins of the 12^{th} JTAG port 22. That is, a pin N03 of the 12^{th} switch 52 is connected to a test clock DMB pin TCK_DMB of the 12^{th} JTAG port 22, and a pin N04 of the 12^{th} switch 52 is connected to a test data output DMB pin TDO_DMB pin of the 12^{th} JTAG port 22.

In contrast to the high signal, when a low signal is input, a pin NC3 of the 12^{th} switch 52 is connected to a key input pin KEY_INT of the earphone port EAR, and a pin NC4 of the 12^{th} switch 52 is connected to another pin JACK_IN of the earphone port EAR.

Pins COM3 and COM4 of the 12^{th} switch 52 are common pins connected to pins TCK_IF and TDO_IF of the second interface connector 40, respectively.

The 13^{th} switch 53 receives control signals, i.e. high and low signals, and is activated in response to the high signal to connect some pins of the 12^{th} JTAG port 22 and the second interface connector 40. That is, if the high signal is input, a pin N0 of the 13^{th} switch 53 is connected to a pin RESET_DMB_N of the 12^{th} JTAG port 22, and a pin COM of the 13^{th} switch 53 is connected to a pin RESET_IF of the second interface connector 40 as a common pin.

In short, when the high signal is input, the pins TDI_DMB, TRSTB_DMB, TMS_DMB, and RTCK_DMB of the 12^{th} JTAG port 22 are connected to the 11^{th} switch 51, the pins TCK_DMB and TDO_DMB of the 12^{th} JTAG port 22 are connected to the 12^{th} switch 52, and the pin RESET_DMB_N of the 12^{th} JTAG port 22 is connected to the 13^{th} switch 53.

On the other hand, when the low signal is input, the pins EARSPK_L and EARSPK_R of the earphone port EAR are connected to the 11^{th} switch 51, and the other pins KEY_INT and JACK_IN of the earphone port EAR are connected to the 12^{th} switch 52. In this case, pins TRST_IF, TMS_IF, RTCK_IF, TCK_IF, TDO_IF, and RESET_IF of the second interface connector 40 are connected to the 11^{th} switch 51 and 12^{th} switch 52 as output pins.

The switch unit 50 configures connections of the pins of the 12^{th} JTAG port 22 and the earphone port EAR to the second interface connector 40 in response to a control signal received through the test control signal line JTAG_SEL.

In this exemplary embodiment, the high and low signals are used to select the JTAG port to be connected to the respective switch. However, the high and low signals may be the inverse of each other or otherwise configured to have different characteristics.

The present invention is not limited to the configuration of the switch of FIG. 3. For example, the signal lines of the switch may be changed in accordance of modifications of the CPUs and JTAG ports.

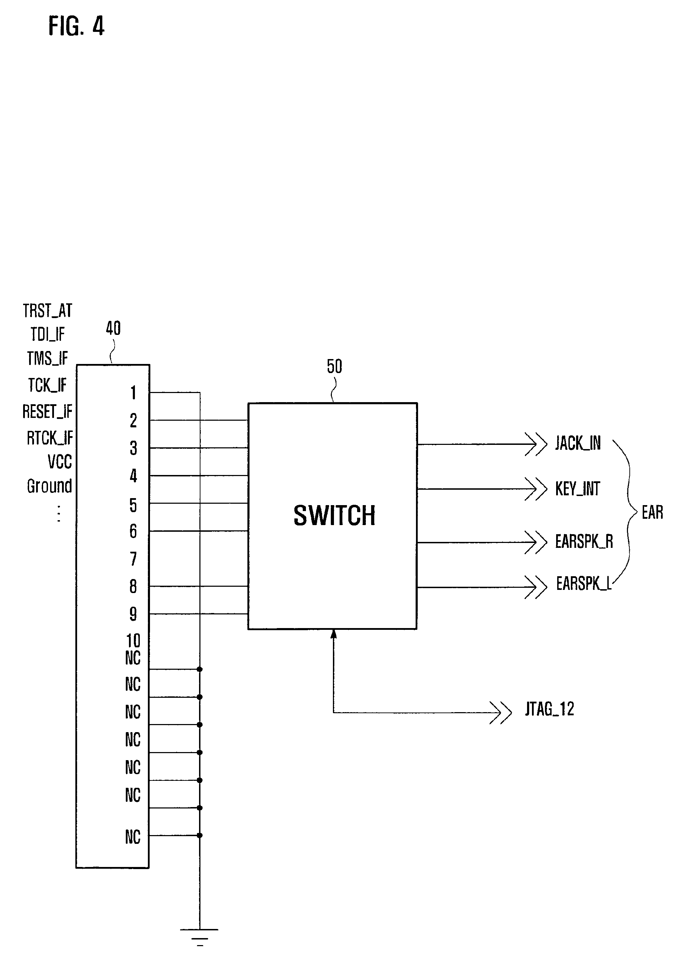

FIG. 4 is a partial enlarged view showing a coupling between the second interface connector and the switch of FIG. 3.

In this exemplary embodiment, it is assumed that the second interface connector 40 is a 10-pin earphone jack, and the pins of the switch 50 may be connected to the pins of the earphone jack, the 12^{th} JTAG port 22, and the earphone port EAR.

The 10-pin earphone jack 40 is connected to the switch 50 such that the switch 50 may selectively connect the earphone jack 40 to the earphone port EAR and the 12^{th} JTAG port 22.

Referring to FIG. 4, the earphone jack 40 is connected to the switch 50 through a plurality of signal lines, some of which are led to the 12^{th} JTAG port 22 and the others of which are led to the earphone port EAR. The second interface connector 40 is an 18-pin connector, in which 8 pins are disabled. The 8 pins are reserved for supplementary usage and may be removed. The 10-pin earphone jack 40 includes pins TRST_AT, TDI_IF, TMS_IF, TCK_IF, RESET_IF, RTCK_IF, VCC, and GND connected to the corresponding pins of the 12^{th} JTAG port 22 of the sub CPU 20.

The earphone port EAR includes a pin JACK_IN to signal test, a pin KEY_INT to test a key input through an earphone, a pin EARSPK_L to output a signal to a left speaker of an earphone, and a pin EARSPK_R to output a signal to a right speaker of the earphone.

The 12^{th} JTAG port 22 includes pins corresponding to the test related pins of the 10-pin earphone jack 40 (see FIG. 3).

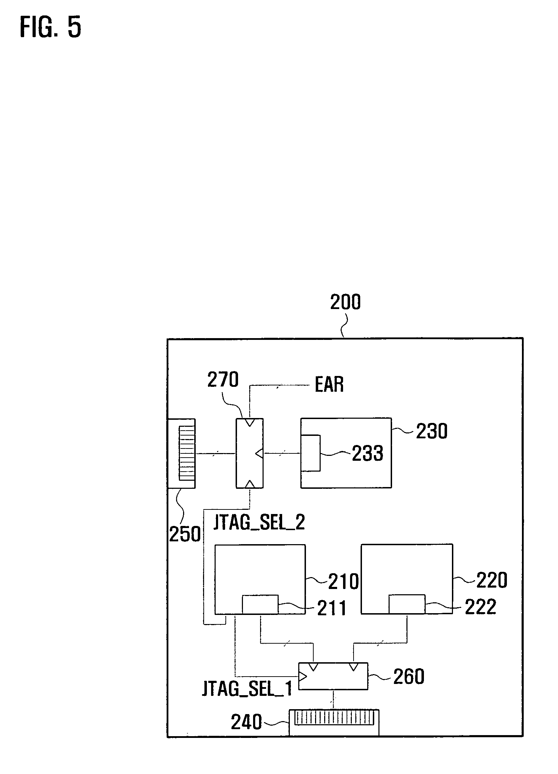

FIG. 5 is a block diagram showing a configuration of a mobile terminal according to another exemplary embodiment of the present invention.

Referring to FIG. 5, the mobile terminal 200 includes a first CPU 210, a second CPU 220, a third CPU 230, a 21^{st} JTAG port 211 to test the first CPU 210, a 22^{nd} JTAG port 222 to test the second CPU 220, a 23^{rd} JTAG port 233 to test the third CPU 230, a first interface connector 240, a first switch unit 260 to selectively connect the first and second CPUs 210 and 220 to the first interface connector 240, a second interface connector 250, and a second switch unit 270 to selectively connect the third CPU 230 and an earphone port EAR to the second interface connector 250.

In this exemplary embodiment, the first CPU 210, second CPU 220, and third CPU 230 may separately process signals associated with different functions and their roles may overlap. Although the first CPU 210 plays a role in controlling the basic operations of the mobile terminal 200 in this exemplary embodiment, the first CPU 210 also may control other supplementary functions of the mobile terminal 200, such as multimedia playback and gaming functions.

The first CPU 210 is a main CPU for processing basic functions of the mobile terminal 200. That is, the first CPU 210 controls call processing, message processing, and data communication. The first CPU 210 generates control signals to control the first and second switch units 260 and 270 and transmits the control signals to the first and second switch units 260 and 270 through a first test control signal line JTAG_SEL_1 and a second test control signal line JTAG_SEL_2. The first CPU 210 is connected to the first interface connector 240 by means of the first switch unit 260.

The second CPU 220 is connected to the first switch unit 260 such that the second CPU 220 is connected to the first interface connector 240 to be tested when the mobile terminal 200 is in a test mode. The second CPU 220 is responsible for signal processing associated with supplementary functions of the mobile terminal 200. The second CPU 220 is provided with a complex programmable logic device (CPLD) for expanding the GPIO ports of the first CPU 210. The second CPU 220 is connected to the first interface connector 240 by means of the first switch unit 260.

The third CPU 230 is connected to the second interface connector 250 by means of the second switch unit 270. The third CPU 230 is an optional function chip, such as a WiBro chip or a PDA chip. The third CPU 230 may be implemented with a CPLD for GPIO expansion of the first CPU 210 or to level voltage between the first and second CPUs 210 and 220.

The 21^{st} JTAG port 211 is arranged at one side of the first CPU 210 and connected to the first interface connector 240 by means of the first switch unit 260. The 21^{st} JTAG port 211 is provided with a plurality of pins for testing the first CPU 210.

The 22^{nd} JTAG port 222 is arranged at one side of the second CPU 220 and connected to the first interface connector 240 by means of the first switch unit 260. The 22^{nd} JTAG port 222 is provided with a plurality of pins for testing the second CPU 220.

The 23^{rd} JTAG port 233 is arranged at one side of the third CPU 230 and connected to the second interface connector 250 by means of the second switch unit 270. The 23^{rd} JTAG port 233 is provided with a plurality of pins for testing the third CPU 230.

The earphone port EAR is provided for outputting audio signals to an earphone connected through the second interface connector 250.

The first interface connector 240 is provided with a plurality of pins, some of which are selectively connected to the first and second CPUs 210 and 220 by means of the first switch unit 260. The first interface connector 240 is also provided with pins to charge power to the mobile terminal 200 and download data from the mobile terminal 200.

The second interface connector 250 is provided with a plurality of pins, some of which are connected to the third CPU 230 and others of which are connected to the earphone port EAR by means of the second switch unit 270.

The first switch unit 260 is connected to the first CPU 210 through the 21^{st} JTAG port 211 and to the second CPU through the 22^{nd} JTAG port 222 to selectively connect the first and second CPUs 210 and 220 to the first interface connector 240. The first switch unit 260 enables the first and second CPUs 210 and 220 to transmit signals to an external device connected through the first interface connector 240 and to receive signals from the external device, by selectively connecting the first and second CPUs 210 and 220 to the first interface connector 240. The first switch unit 260 is also connected to the first CPU 210 through the first test control signal line JTAG_SEL_1 such that the first switch unit 260 selectively connects the first interface connector 240 to the 21^{st} JTAG port 211 and the 22^{nd} JTAG port 222 in accordance with the test control signal received through the first test control signal line JTAG_SEL_1.

The second switch unit 270 selectively connects the second interface connector 250 to the earphone port EAR and the 23^{rd} JTAG port 233 of the third CPU 230. The second switch unit 270 is connected to the first CPU 210 through the second test control signal line JTAG_SEL_2 such that the second switch unit 270 selectively connects the second interface connector 250 to the 23^{rd} JTAG port 233 of the third CPU 230 and the earphone port EAR in accordance with the test control signal received through the second test control signal line JTAG_SEL_2.

In short, the mobile terminal 200 of this exemplary embodiment provides two interface connectors 240 and 250 of which the first interface connector 240 is selectively connected to the first and second CPUs 210 and 220 by means of the first switch unit 260, and the second interface connector 250 is selectively connected to the third CPU 230 and the earphone port EAR, whereby the first and second CPUs 210 and 220 may be tested in series through the first interface connector 240 while the third CPU 230 is simultaneously tested through the second interface connector 250.

When N and K are greater than 0 (N is a number of CPUs) and 1<K<N, the mobile terminal may be configured such that the first interface connector is responsible for the first to K^{th} CPUs and the second interface connector is responsible for the K+1^{th} to N^{th} CPUs and the earphone port EAR. A test system to test such a mobile terminal may include a second switch unit to selectively connect the K+1^{th} to N^{th} JTAG ports to the second interface connector, at least one connector to connect the test device to the first and second interface connectors, a jig box to deliver test signals to the CPUs through the external connector, a test computer to monitor the CPUs, and a JTAG trace arranged between the test computer and the jig box to convert the signal output from the test computer into a signal appropriate for the jig box.

Detailed structures and operations of the switches of FIG. 5 are described hereinafter. Since the structure and operation of the second switch are identical to those of the switch of FIG. 3, a detailed description of the second switch is omitted.

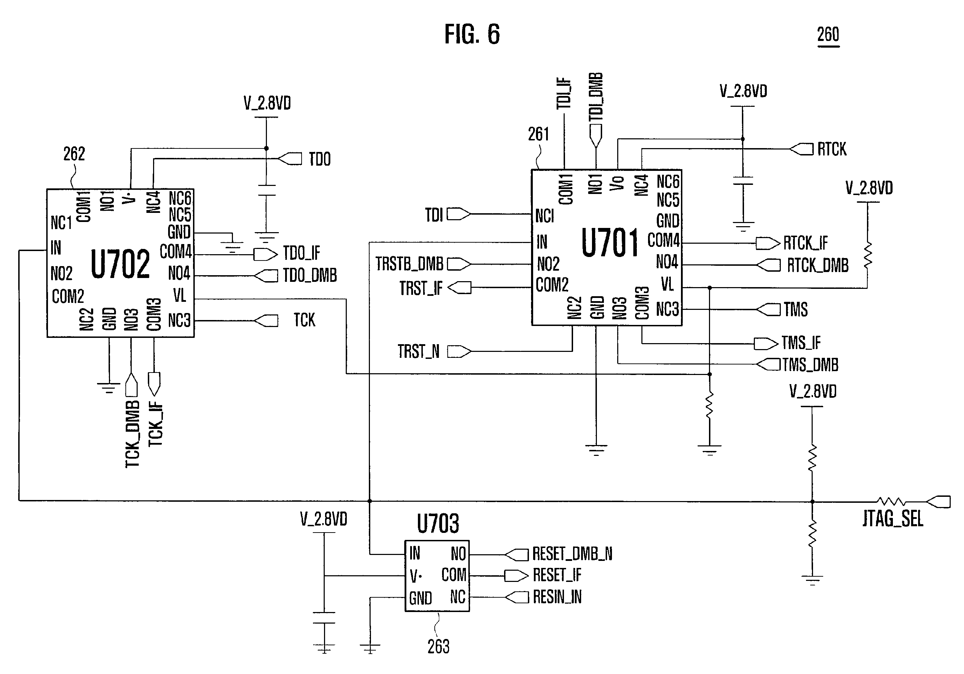

FIG. 6 is a circuit diagram showing a configuration of the first switch unit of FIG. 5.

In this exemplary embodiment, it is assumed that the first CPU 210 is a main unit, and the second CPU 220 is a DMP chip to control a DMB module of the mobile terminal 200.

Referring to FIG. 6, the first switch unit 260 includes a 21^{st} switch 261, a 22^{nd} switch 262, and a 23^{rd} switch 263. The switches 261, 262, and 263 operate in accordance with test control signals transmitted from the first CPU 210 through the first test control signal line JTAG_SEL_1.

The 21^{st} switch 261 receives the test control signal through an input pin IN. If the test control signal is high, the 21^{st} switch 261 is activated to enable some pins of the 21^{st} JTAG port 211. Thus, a pin NC1 of the 21^{st} switch 261 is connected to a pin TDI of the 21^{st} JTAG port 211, a pin NC2 of the 21^{st} switch 261 is connected to a pin TRST_N of the 21^{st} JTAG port 211, a pin NC3 of the 21^{st} switch 261 is connected to a pin TMS of the 21^{st} JTAG port 211, and a pin NC4 of the 21^{st} switch 261 is connected to a pin RTCK of the 21^{st} JTAG port 211.

If the test control signal is low, the 21^{st} switch 261 enables some pins of the 22^{nd} JTAG port 222 such that a pin N01 of the 21^{st} switch 261 is connected to a test data input DMB pin TDI_DMB of the 22^{nd} JTAG port 222, a pin N02 of the 21^{st} switch 261 is connected to a JTAG trace test reset DMB pin TRSTB_DMB of the 22^{nd} JTAG port 222, a pin N03 of the 21^{st} switch 261 is connected to a test mode select DMB pin TMS_DMB of the 22^{nd} JTAG port 222, and a pin N04 of the 21^{st} switch 261 is connected to a reserve test clock DMB pin RTCK_DMB of the 22^{nd} JTAG port 222. Such pins of the 22^{nd} JTAG port 222 are used for a DMB-related test on the second CPU 220, i.e. DMB chip.

The pins COM1, COM2, COM3, and COM4 of the 21^{st} switch 261 are common pins that are connected to pins TDI_IF, TRST_IF, TMS_IF, and RTCK_IF of the first interface connector 240, respectively.

The 22^{nd} switch 262 receives the test control signal through its input pin IN. If the test control signal is low, the 22^{nd} switch 262 is activated so as to enable some pins of the 22^{nd} JTAG port 222. Thus, a pin N03 of the 22^{nd} switch 262 is connected to a test clock DMB pin TCK_DMB of the 22^{nd} JTAG port 222, and a pin N04 of the 22^{nd} switch 262 is connected to a test data output DMB pin TDO_DMB of the 22^{nd} JTAG port 222.

If the test control signal is low, a pin NC3 of the 22^{nd} switch 262 is connected to a pin TCK of the 21^{st} JTAG port 211, and a pin NC4 of the 22^{nd} switch 262 is connected to a pin TDO of the 21^{st} JTAG port 211.

The pins COM3 and COM4 of the 22^{nd} switch 262 are common pins connected to the pins TCK_IF and TDO_IF of the first interface connector 240, respectively.

The 23^{rd} switch 263 receives the test control signal through an input pin IN. The 23^{rd} switch 263 is activated in response to a high or low signal so as to connect some pins of the 21^{st} JTAG port 211 and 22^{nd} JTAG port 222 to corresponding pins of the second interface connector 250. For example, a pin NC of the 23^{rd} switch 263 is connected to a pin RESIN_IN of the 21^{st} JTAG port 211 when the test control signal is high and a pin N0 of the 23^{rd} switch 263 is connected to a pin RESET_DMB_N of the 22^{nd} JTAG port 222 when the test control signal is low. The pin COM of the 23^{rd} switch 263 is a common pin that is connected to a pin REST_IF of the first interface connector 240.

The test control signal is used to select a JTAG port by means of the switches such that the test control signal levels to select the respective JTAG ports may be changed according to a configuration of the mobile terminal.

As described above, the multiple CPUs of the mobile terminal are connected to two different interface connectors via JTAG ports of the CPUs, such that the inputs and outputs of the CPUs may be distributed by means of the two interface connectors, which may result in simplification of connection lines. Also, since the first and second interface connectors of the mobile terminal may be activated at the same, the multiple CPUs may be simultaneously tested and connections and signal flows between the CPUs may be tested.

Although each interface connector is connected to two CPUs or one CPU and an earphone port in this exemplary embodiment, the number of the elements connected to one switch may be altered as necessary.

Although the mobile terminals of the above exemplary embodiments are implemented with the test control signal lines that connect the main CPU and the switches, the test control signal lines may be configured to connect the interface connectors and the corresponding switches.

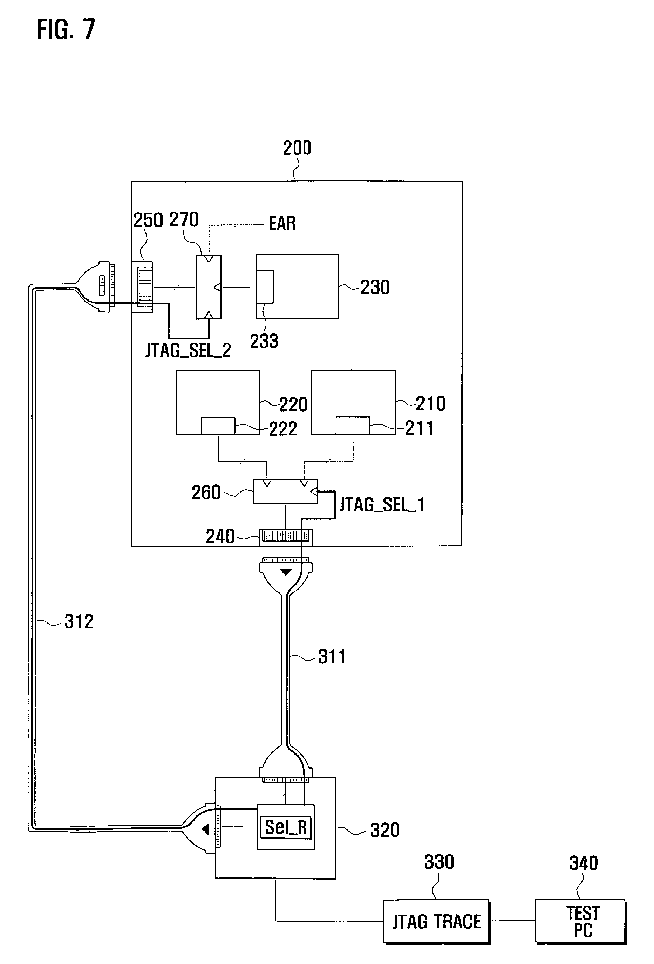

FIG. 7 is a block diagram showing a configuration of a multi-CPU test system according to another exemplary embodiment of the present invention.

Referring to FIG. 7, the multi-CPU test system includes a mobile terminal having a first CPU 210, a second CPU 220, a third CPU 230, a 21^{st} JTAG port 211 to test the first CPU 210, a 22^{nd} JTAG port 222 to test the second CPU 220, a 23^{rd} JTAG port 233 to test the third CPU 230, a first interface connector 240, a first switch unit 260 to selectively connect the first and second CPUs 210 and 220 to the first interface connector 240, a second interface connector 250, and a second switch unit 270 to selectively connect the third CPU 230 and an earphone port EAR to the second interface connector 250. The multi-CPU test system further includes a jig box 320 connected to the first and second interface connectors 240 and 250 through respective first and second external connectors 311 and 312, a JTAG trace 330 connected to the jig box 320, and a test computer 340 connected to the JTAG trace 330. The first interface connector 240 is connected to the first switch 260 through a first test control signal line JTAG_SEL_1, and the second interface connector 250 is connected to the second switch 270 through a second test control signal line JTAG_SEL_2.

The mobile terminal of this exemplary embodiment has a configuration identical to that of the mobile terminal in FIG. 5 except for the first and second test control signal lines JTAG_SEL_1 and JTAG_SEL_2, and thus, detailed descriptions of the same structures and functions of the mobile terminal are omitted.

Referring to FIG. 7, the first test signal line JTAG_SEL_1 connects the first switch 260 and the first interface connector 240 and is extended to the jig box 320 through the first external connector 311. The second test signal line JTAG_SEL_2 connects the second switch 270 and the second interface connector 250 and is extended to the jig box 320 through the second external connector 312. Accordingly, a test control signal generated by a switching routine SEL_R of the jig box 320 is delivered to the first and second switches 260 and 270 through the respective first external connector 311 connected to the first interface connector 240 and the second external connector 312 connected to the second interface connector 250.

The test control signals delivered to the first and second switches 260 and 270 may be identical to or different from each other. The switching routine SEL_R generates test control signals under the control of the test computer 340. The JTAG trace 330 is arranged between the jig box 320 and the test computer 340 to convert a command signal output from the test computer 340 and output the converted command signal to the jig box 320.

In this exemplary embodiment, the mobile terminal 200 has relatively short test control signal lines JTAG_SEL_1 and JTAG_SEL_2 and the test control signal lines are not associated with any of the CPUs inside the mobile terminal, which may result in reduction of the design complexity and resource waste. Also, since the switching routine SEL_R is installed in the external jig box 320 rather than in a CPU of the mobile terminal 200, memory usage may be reduced. Each CPU of the mobile terminal 200 may be implemented with a CPLD.

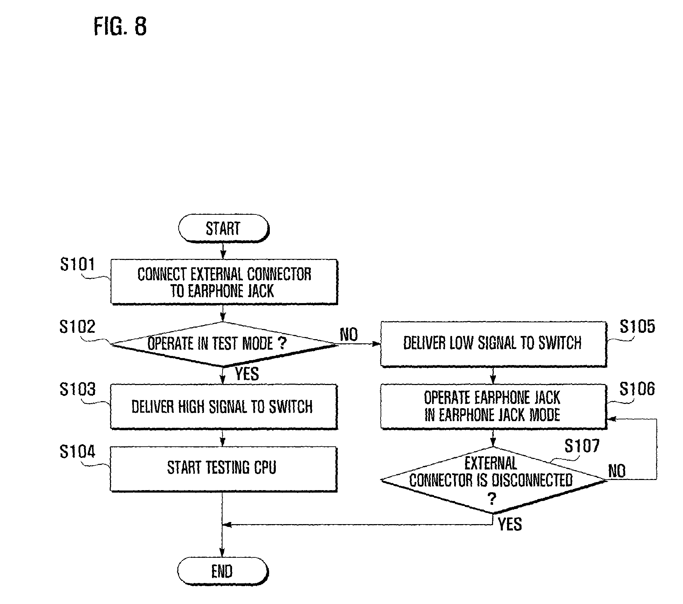

FIG. 8 is a flowchart showing a method for testing a multi-CPU mobile terminal according to an exemplary embodiment of the present invention.

In this exemplary embodiment, a 10-pin earphone jack is employed as the second interface connector of the mobile terminal. However, the present invention is not limited thereto. For example, the multi-CPU test method of the present invention may be adapted to a device having two or more interface connectors. An external connector may be identical to the second external connector of FIG. 7. In this exemplary embodiment, the switches are controlled by a CPU of the mobile terminal. The CPU may be a main CPU or a sub CPU connected to an interface connector by means of a switch. The switch may be configured to operate under the control of an external jig box.

Referring to FIG. 8, an external connector is coupled to an earphone jack of a mobile terminal (S101). The earphone jack is an interface connector to selectively connect an earphone port and a CPU of the mobile terminal. The earphone port is provided to connect an earphone, and the CPU is a sub CPU of the mobile phone.

If a connection of the external connector is detected, the CPU of the mobile terminal 200 determines whether to operate in a test mode (S102).

When an external connector is connected to the earphone jack, the CPU may recognize an operation mode, i.e. a test mode or an earphone jack mode, according to the contacted pins.

If it is determined to operate in the test mode, the CPU transmits a high signal to the switch through a test control signal line for turning on the switch (S103).

In this exemplary embodiment, the test control signal may be generated by the sub CPU, however, it may alternatively be generated by a main CPU or an external jig box. When the test control signal is provided by the jig box, the switch may operate in a default mode or a turn-on mode. The switch is turned on or off in accordance with the test control signal.

If the control signal is high, the switch connects the JTAG port of the CPU to the earphone jack such that the CPU is connected to a test computer 340 and thus, the test computer starts testing the CPU (S104).

The switch connects the JTAG port of the CPU to the earphone jack in accordance with the test control signal such that the test computer delivers test signals to the CPU.

At step S102, if it is determined to operate in the earphone jack mode, the CPU transmits a low signal to the switch through the test control signal line (S105), and thus, the switch activates the earphone jack to operate in the earphone jack mode (S106).

Next, the CPU determines whether the external connector is disconnected from the earphone jack (S107) and disables the earphone jack mode if the external connector is disconnected.

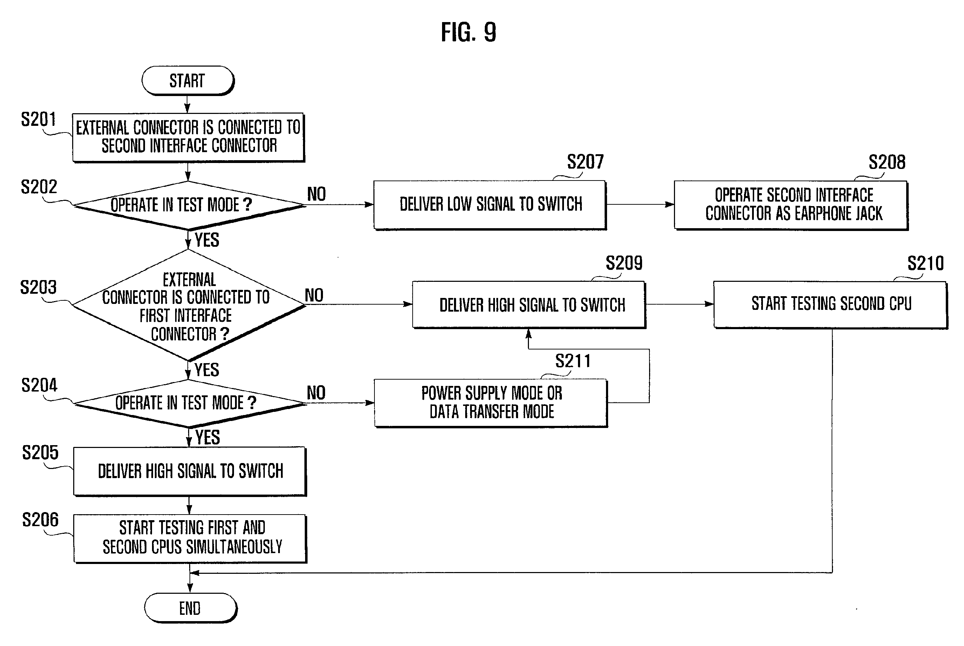

FIG. 9 is a flowchart showing a method for testing a multi-CPU mobile terminal according to another exemplary embodiment of the present invention.

In this exemplary embodiment, at least two CPUs are tested through two interface connectors at the same time. Test control signals may be generated by a first CPU or a second CPU and then delivered to first and second switches. Also, the test control signals may be generated under the control of an external jig box. It is assumed that JTAG ports of the CPUs are connected to the interface connectors when the test control signal is high and the interface connectors are used for other preset functions when the test control signal is low.

In this exemplary embodiment, the second interface connector is an earphone jack and the first interface connector is a dedicated interface connector for the CPU. It is assumed that the second interface connector is connected to a CPU and an earphone port by means of a switch, and the second interface connector is directly connected to a JTAG port of the corresponding CPU.

Referring to FIG. 9, the mobile terminal detects a connection of an external connector to the second interface connector, i.e. the earphone jack (S201). When a connection of an external connector is detected, the mobile terminal recognizes the type of external connector according to the contacts of the pins provided by the external connector.

If a connection of an external connector is detected, the mobile terminal 200 determines whether to operate in a test mode according to the contact pins (S202).

If it is determined to operate in the test mode, the mobile terminal determines whether another external connecter is connected to the first interface connector (S203).

If another external connector is connected to the first interface connector, the mobile terminal determines whether to operate the first CPU in a test mode (S204). The mobile terminal determines the operation mode (i.e. a test mode, a power supply mode, or a data transfer mode) of the first CPU on the basis of pins connected to the JTAG port of the first CPU.

If it is determined to operate the first CPU in the test mode, the mobile terminal generates a high signal and transmits the high signal to the switch (S205). In response to the high signal, the switch connects the second interface connector to the JTAG port of the second CPU 220.

After the first and second CPUs are connected to the respective interface connectors, the first and second CPUs are tested at the same time (S206).

If it is determined to not operate in the test mode at step S202, the mobile terminal controls the second CPU to generate and output a low signal to the switch (S207) and thus, the second interface connector is connected to the earphone port EAR to operate as the earphone jack (S208).

If another external connector is not connected to the first interface connector, the mobile terminal controls a high signal to be delivered to the switch (S209), and thus, only the first CPU is tested (S210).

If it is determined to not operate the first CPU in the test mode, the mobile terminal sets the first CPU to power supply mode or data transfer mode (S211) and then the process goes to step S209.

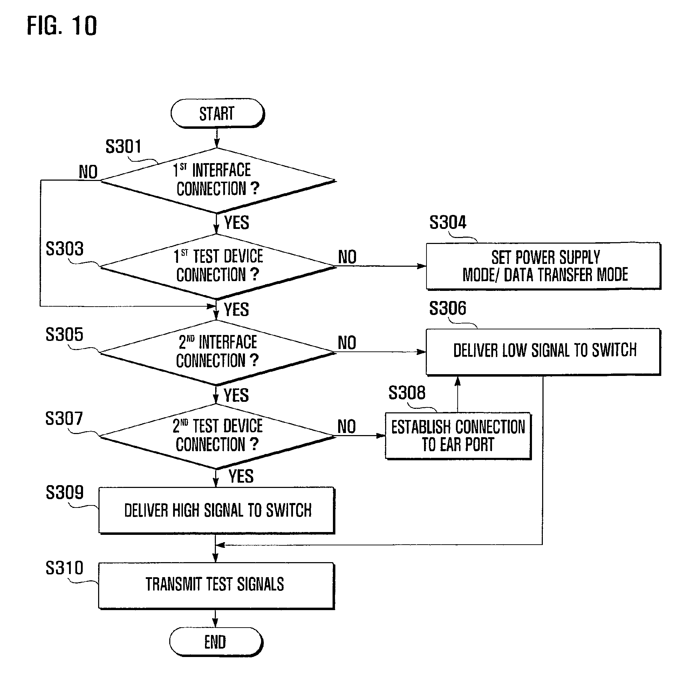

FIG. 10 is a flowchart showing a method for testing a multi-CPU mobile terminal according to another exemplary embodiment of the present invention.

Referring to FIG. 10, a determination is made as to whether a first interface connection is detected (S301).

If a first interface connection is detected, the mobile terminal determines whether the first connection is established by a first test device (S303).

If the first connection is not established by a first test device, the mobile terminal sets the first CPU to power supply mode or data transfer mode in accordance with the type of device established the first interface connection (S304).

If the first connection is established by a first test device, the mobile terminal determines whether a second interface connection is detected (S305). At step S301, if a first interface connection is not detected, the mobile terminal also performs the step S305, skipping step S303.

If a second interface connection is not detected, the mobile terminal delivers a low signal to the switch to disable a test mode (S306).

If a second interface connection is detected, the mobile terminal determines whether the second interface connection is established by a second test device (S307).

If the second interface connection is not established by a second test device, the mobile terminal establishes a connection to an earphone port (S308) and delivers a low signal to the switch so as to disable a test mode (S306).

If the second interface connection is established by a second test device, the mobile terminal delivers a high signal to the switch (S309).

Finally, test signals are transmitted to the first and second interfaces (S310).

As described above, a multi-CPU mobile terminal and a system and method for testing the multi-CPU mobile terminal according to the present invention may allow for multiple CPUs constituting the mobile terminal to be tested through two interface connectors either individually or simultaneously.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A mobile terminal, comprising:
at least two processors;
test ports installed in the processors, respectively;
an earphone port;
a first interface connector to connect an external device to the mobile terminal;
a first switch to selectively connect the first interface connecter to the earphone part and at least one of the test ports;
a second interface connector to connect the external device to the mobile terminal; and
a second switch to selectively connect the second interface connector to the remaining test ports.

2. The mobile terminal of claim 1, further comprising test signal lines connecting one of the processors to the switches.

3. The mobile terminal of claim 1, further comprising:
a first test signal line connecting the first interface connector and the first switch; and
a second test signal line connecting the second interface connector and the second switch.

4. A mobile terminal, comprising:
at least two processors;
an earphone port to output an audio signal;
test ports installed in the processors, respectively;
an interface connector to connect an external device to the mobile terminal; and
a switch to selectively connect the interface connector to the earphone port and at least one of the test ports.

5. The mobile terminal of claim 4, further comprising a signal line connecting one of the processors and the switch for delivering a control signal to the switch.

6. The mobile terminal of claim 4, further comprising a signal line connecting the switch and the interface connector.

7. A mobile terminal, comprising:
two processors, each processor comprising a joint test action group (JTAG) port;
an earphone port to output an audio signal;
a first interface connector to connect the JTAG port of one of the two processors to an external device;
a switch to selectively connect the first interface connector to the earphone port and the JTAG port of the first processor; and
a second interface connector to connect the JTAG port of the other processor to the external device.

8. A multi-processor test system to test multiple processors, comprising:
a mobile terminal comprising:
an earphone port to output an audio signal of the mobile terminal,
test ports installed in the processors, respectively,
a first interface connector to connect an external device to the mobile terminal,
a first switch to selectively connect the first interface connector to the earphone port and at least one of the test ports,
a second interface connector to connect the external device to the mobile terminal, and
a second switch to selectively connect the second interface connector to the other test ports;
an external connector connected to at least one of the first interface connector and the second interface connector; and
a jig box connected to the external connector to exchange test signals with the processors through the first interface connector and the second interface connector.

9. The multi-processor test system of claim 8, further comprising:
a test computer connected to the jig box to monitor and control tests of the processors; and
a joint test action group JTAG trace interposed between the jig box and the test computer to convert a signal from the test computer into a jig box readable signal.

10. A multi-processor test system for testing multiple processors, comprising:
a mobile terminal comprising:
an earphone port to output an audio signal of the mobile terminal,
joint test action group (JTAG) ports installed in the respective processors,
an ear jack interface connector to connect an external device to the mobile terminal, and
a switch to selectively connect the ear jack interface connector to the earphone port and at least one of the JTAG ports;
an external connector connected to the ear jack interface connector; and
a jig box connected to the external connector to exchange test signals with the processors through the ear jack interface connector.

11. The multi-processor test system of claim 10, further comprising a control signal line connecting the switch and one of the processors to deliver a control signal from the processor to the switch.

12. The multi-processor test system of claim 10, further comprising a control signal line connecting the switch and the ear jack interface connector to deliver a control signal from the jig box to the switch through the external connector.

13. The multi-processor test system of claim 12, wherein the jig box includes a switching routine to generate the control signal.

14. The multi-processor test system of claim 10, further comprising:
a test computer connected to the jig box to monitor and control tests of the processors; and
a joint test action group (JTAG) trace interposed between the jig box and
the test computer to convert a signal from the test computer into a jig box readable signal.

15. A multi-processor test system to test multiple processors, comprising:
a mobile terminal comprising:
an earphone port,
a first processor having a first joint test action group (JTAG) port,
a second processor having a second JTAG port,
a first interface connector to connect an external device to the mobile terminal,
a switch to selectively connect the first interface connector to the earphone port and the first JTAG port, and
a second interface connector to connect the external device to second processor through the second JTAG port;
an external connector connected to at least one of the first interface connector and the second interface connector; and
a jig box connected to the external connector to exchange test signals with the first processor and the second processor through the first JTAG port and the second JTAG port.

16. A multi-processor test method for testing multiple processors of a mobile terminal comprising an earphone jack connector, comprising:
connecting the earphone jack connector to a test port installed in one of processors; and
testing the processor through the test port.

17. The multi-processor test method of claim 16, further comprising activating a switch to select one of the test port and an earphone port.

18. The multi-processor test method of claim 17, wherein activating a switch comprises:
establishing a connection link between the earphone jack connector and
the earphone port according to a first control signal; and
establishing a connection link between the earphone jack connector and
the test port according to a second control signal.

19. A multi-processor test method for testing multiple processors of a mobile terminal having an earphone jack connector, comprising:
connecting a first interface connector of the mobile terminal to a first external connector;
determining whether to enter a test mode depending on the type of first external connector;
connecting the first interface connector to a first test port of a first processor if it is determined that a test mode is to be entered;
determining whether a second interface connector of the mobile terminal is connected to a second external connector;
determining whether to enter a test mode depending on the type of second external connector;
connecting the second interface to a second test port of a second processor if it is determined that a test mode is to be entered;
testing the first processor and the second processor at the same time.

20. The multi-processor test method of claim 19, further comprising activating a switch to selectively connect the first interface connector to the first test port of the first processor.
